# EUROPÄISCHE PATENTSCHRIFT

(11) **EP 1 360 487 B1**
(45) Veröffentlichungstag und Bekanntmachung des Hinweises auf die Patenterteilung: **29.10.2008**
(21) Anmeldenummer: 02719834.0
(22) Anmeldetag: 14.02.2002
(51) Int. Cl.: G01N 33/50, B01L 3/00, B01F 7/16, B01L 3/02, G01N 15/14

(54) **DISPENSIONSVORRICHTUNG**
DISPENSING DEVICE
DISPOSITIF DE DISTRIBUTION

(30) Priorität: 14.02.2001 DE 10106713
(43) Veröffentlichungstag der Anmeldung: 12.11.2003
(73) Patentinhaber: Evotec AG, 22525 Hamburg (DE)
(72) Erfinder: KEHLENBECK, Markus, 28844 Weyhe (DE); PUMP, Dennis, 22081 Hamburg (DE); WEBER, Dagmar, 22525 Hamburg (DE); WERNER, Irmgard, 21614 Buxtehude (DE); LAMBRÜ, Dagmar, 22525 Hamburg (DE)
(74) Vertreter: von Kirschbaum, Alexander
(86) Internationale Anmeldenummer: PCT/EP2002/001544
(87) Internationale Veröffentlichungsnummer: WO 2002/065121

(56) Entgegenhaltungen:
- EP-A- 0 024 230
- EP-A- 0 119 573
- WO-A-00/14534
- WO-A-92/18608
- US-A- 4 110 167

## Beschreibung

Die Erfindung betrifft eine Dispensionsvorrichtung zur Dispension von Zellsuspensionen.

Insbesondere in der Wirkstoffforschung wird heutzutage eine große Anzahl von Wirksubstanzen mit Hilfe von Hochdurchsatz-Screening getestet. Hierbei wird eine große Anzahl von Proben in einem automatisierten Verfahren in kurzer Zeit getestet. Die Wirksubstanzen werden beim Hochdurchsatz-Screening in miniaturisierte Mikrotiterplatten oder andere geeignete Probenträger mit Vertiefungen (Wells) eingebracht. Da die Kosten für die Wirksubstanzen, deren Lagerung in Substanzbibliotheken sowie die Entsorgung der Wirksubstanzen nach dem Testvorgang äußerst kostenintensiv ist, sind die Volumina der einzelnen Wells möglichst klein. Bei modernen Titerplatten sind die Volumina der einzelnen Wells häufig im Mikroliter- und Nanoliterbereich.

Es ist somit erforderlich, Kleinstmengen in die Wells durch Pipettieren oder Dispensieren einzubringen. Eine geeignete Pipettiervorrichtung für Wirksubstanzen ohne empfindliche Partikel ist beispielsweise in WO 96/24040 beschrieben.

Da die Bedeutung der Untersuchung von Zellsuspensionen zugenommen hat, ist es erforderlich eine Vorrichtung zu entwickeln, mit der auch Zellsuspensionen in Kleinstmengen den Wells zugeführt werden können. Hierbei besteht insbesondere das Problem, dass Zellen und andere mechanisch wenig stabile Partikel beim Zuführen in die Wells leicht beschädigt werden. Insbesondere ist das Pipettieren von flüssigen Proben für Zellsuspensionen nicht einsetzbar, da die Partikel beispielsweise sowohl beim Einsaugen in die Pipette als auch beim Ausstoßen aus der Pipette die sehr enge Pipettenöffnung passieren müssen. Hierbei ist beispielsweise die Gefahr der Scherung der Zellen sowie die Schädigung der Oberflächenfunktion der Zellen sehr hoch. Die in WO 96/24040 beschriebene Pipetiervorrichtung ist daher für Zellsuspension en nicht verwendbar.

Aus WO 98/06821 ist ferner ein System zum Dispensieren von Flüssigkeiten bekannt. Hierbei wird je Dispensiervorgang ein einzelner Partikel bzw. eine einzelne Zelle dispensiert. Es handelt sich hierbei um eine äußerst aufwendige und kostenintensive Vorrichtung. Eine derartige Vorrichtung ist für das Hochdurchsatz-Screening insbesondere nicht geeignet, da das Füllen der einzelnen Wells, in welchen eine bestimmte Anzahl an Zellen enthalten sein soll, zu zeitintensiv ist, um beispielsweise bei effektiven Anlagen mehr als 10 000 Tests pro Tag durchführen zu können.

Ferner sind Mikrodispenser aus EP 0 119 573 und EP 0 024 230 bekannt, bei denen der Mikrodispenser mit einem Vorratsreservoir verbunden ist.

Aufgabe der Erfindung ist es, eine Dispensionsvorrichtung zur Dispension von Zellsuspensionen zu schaffen, mit der ein Dispensieren von Kleinstmengen über mehrere Stunden möglich ist.

Die Lösung der Aufgabe erfolgt erfindungsgemäß durch eine Dispensionsvorrichtung mit den Merkmalen des Anspruchs 1.

Die erfindungsgemäße Dispensionsvorrichtung weist ein Reservoir zur Aufnahme einer Zellsuspension auf. Die Zellsuspension kann ferner auch synthetische Mikropartikel, wie Beads, insbesondere polymere Beads, aufweisen. Insbesondere beim Dispensieren von Zellen besteht das Problem, dass diese nicht homogen in der Flüssigkeit verteilt sind und es somit nicht möglich ist, beispielsweise die Wells einer Titerplatte mit einer reproduzierbaren Anzahl an Zellen mit geringer Varianz zu befüllen, da Sedimentationseffekte und dergleichen auftreten, die die Konzentration der Zellen lokal in der Suspension verändern. Hierdurch verändert sich die Anzahl der dosierten Zellen bei jedem Dosiervorgang derart, dass eine Verfälschung der Messergebnisse erfolgt. Erfindungsgemäß weist die Dispensionsvorrichtung zur Homogenisierung der Zellverteilung in der Zellsuspension ein auf die Zellsuspension einwirkendes Suspensionsmittel auf. Durch das Suspensionsmittel wird ein Mischen der Zellsuspension erreicht, so dass eine im Wesentlichen homogene Partikelverteilung in der Zellsuspension erreicht ist. Die Varianz der Anzahl der einzelnen Zellen in den Wells ist somit äußerst gering. Insbesondere ist die Varianz zwischen den einzelnen Wells kleiner als 15 %, insbesondere kleiner als 10 %. Eine derart geringe Varianz kann auch bei kontinuierlichem Dispensieren über mehrere Stunden verwirklicht werden. Beispielsweise beträgt die Zellkonzentration in der Suspension zwischen 1 x 10⁵ bis 2 x10⁶ Zellen pro ml. Hieraus ergibt sich eine Anzahl von 100 - 2.000 Zellen je Weil bei einer Füllung von 1 µl je Well. Auch bei derart hohen Zellkonzentrationen kann die vorstehend geringe Varianz auf Grund des Vorsehens eines Suspensionsmittels in dem Reservoir erzielt werden.

Ferner weist die Dispensionsvorrichtung einen Mikrodispenser zur Abgabe von Mikrotropfen auf. Die Mikrotropfen, deren Volumen kleiner als 5 µl, vorzugsweise kleiner als 100 nl, vorzugsweise kleiner als 10 nl, insbesondere kleiner als 3 nl und besonders bevorzugt kleiner als 0,5 nl ist, werden von dem Mikrodispenser in die Wells oder Vertiefungen eines Probenträgers abgegeben. Hierzu ist der Mikrodispenser über ein Fluidelement mit dem Reservoir zur kontinuierlichen Bereitstellung von Zellsuspension an dem Mikrodispenser verbunden.

Mit der erfindungsgemäßen Dispensionsvorrichtung ist es aufgrund des Vorsehens eines Suspensionsmittels möglich, eine Zellsuspension über mehrere Stunden zu dispensieren, wobei die Anzahl der Zellen in den einzelnen Dispensiervorgängen eine geringe Varianz aufweist. Es ist somit mit der erfindungsgemäßen Dispensionsvorrichtung möglich, eine einheitliche und reproduzierbare Zahl an Zellen in Abhängigkeit des abgegebenen Volumens zu erzeugen.

Das Suspensionsmittel ist insbesondere derart ausgebildet, dass beim Mischen der Zellsuspension im Wesentlichen keine Beschädigung der Zellen auftritt.

Hierfür ist beispielsweise ein Stabrührer einsetzbar. Der Stabrührer, bei dem es sich bevorzugt um einen Stabrührer mit dreieckigem Rührelement handelt, ist beispielsweise mit Hilfe von Magnetkräften über einen unterhalb des Reservoirbodens angeordneten Motor angetrieben. Hierdurch kann eine äußerst effektive Suspendierung in der Zellsuspension erzielt werden. Da bei einem derartigen Stabrührer jedoch Reibung zwischen dem Rührelement und dem Reservoirboden auftritt, kann auf Grund des Auftretens von starken Scherkräften eine Zerstörung der Zellen auftreten. Bevorzugt wird daher als Suspensionsmittel ein hängendes Rührsystem, insbesondere ein hängender Stabrührer, eingesetzt. Dieser wird über eine beispielsweise mit dem Deckel des Reservoirs verbundene drehbare Achse möglichst zentriert in dem Reservoir angebracht. Der Antrieb kann über einen mit der Achse verbundenen, außerhalb des Reservoirs angeordneten Motor erfolgen. Ebenso kann der Motor wiederum unterhalb des Reservoirbodens angeordnet sein und den Stabrührer über Magnetkräfte antreiben. Um ein möglichst gutes Antreiben des Rührers mit Hilfe von Magnetkräften zu ermöglichen, weist der Rührer vorzugsweise Seltene-Erden-Metalle auf. Auf Grund des Vorsehens von Seltene-Erden-Metallen ist es möglich, den Rührer auch durch dicke Reservoirwände, insbesondere dicke Reservoirböden, anzutreiben. Ein frei in der Zellsuspension hängender Stabrührer hat den Vorteil, dass beim Rühren keine Berührung des Stabrührers mit dem Reservoirboden oder einer Reservoirwand stattfindet. Hierdurch sind die mechanischen Belastungen für die Zellen oder andere in der Zellsuspension enthaltenen Partikel bei Erzielen einer guten Homogenität innerhalb der Zellsuspension minimiert.

Der vorzugsweise verwendete Rührer weist mindestens drei, vorzugsweise mindestens vier Rührblätter auf. Diese sind insbesondere regelmäßig am Umfang des Rührers angeordnet. Die einzelnen Rührblätter weisen vorzugsweise zur Längsachse des Rührers einen Winkel von 50 bis 85°, besonders bevorzugt 60 bis 70°, auf. Hierbei ist der Winkel derart bestimmt, dass die Rührblätter gegenüber einer bei einem vertikal angeordneten Rührer horizontalen Ebene einen Winkel von 40 bis 5° bzw. 30 bis 20° aufweisen. Bezüglich dieser horizontalen Ebene ist die Neigung der Rührblätter somit relativ flach. Dies hat den Vorteil, dass die Stoßkraft zwischen Partikeln in der Zellsuspension und den Rührblättern reduziert ist. Eine maximale Stoßkraft würde auftreten, wenn die Rührblätter parallel zur Längsachse angeordnet wären. Die Rührblätter sind vorzugsweise an den Kanten abgerundet.

Zur weiteren Verringerung der Stoßkräfte zwischen den Partikeln und den Rührblättern sind Mischflächen der Rührblätter leicht konvex ausgebildet. Unter Mischflächen werden hierbei diejenigen Flächen der Rührblätter verstanden, gegen die die Partikel beim Mischen prallen.

Vorzugsweise ist der Rührer aus inerten, biokompatiblen Materialien hergestellt oder mit derartigen Materialien beschichtet. Vorzugsweise weist der Rührer eine PTFE-Beschichtung auf. Des weiteren ist die Oberfläche der Rührblätter vorzugsweise möglichst glatt ausgebildet, um ein Beschädigen der Partikel zu vermeiden.

Insbesondere bei der Dispension von Zellsuspensionen über mehrere Stunden ist die Gasversorgung der Zellen, insbesondere mit Sauerstoff und Kohlendioxid kritisch. Des weiteren dient die Zufuhr von Kohlendioxid der pH-Regulierung der Flüssigkeit. Bei einer bevorzugten Ausführungsform weist die erfindungsgemäße Dispensionsvorrichtung zusätzlich zu dem Suspensionsmittel, durch das die Gasversorgung der Zellen bereits unterstützt wird, eine Gasversorgungseinrichtung auf. Hierzu ist das Reservoir beispielsweise über eine Gaszuleitung mit der Gasversorgungseinrichtung verbunden. Diese ist vorzugsweise regelbar, so dass beispielsweise in Abhängigkeit der Partikelart Gas dem Reservoir zugeführt werden kann. Hierzu ist das Reservoir vorzugsweise derart ausgebildet, dass es nicht vollständig mit der Zellsuspension befüllt ist und sich ein Gasraum im oberen Bereich des Reservoirs bildet.

Zur besseren Versorgung der Zellen mit Sauerstoff, Kohlendioxid oder anderen Gasen kann das Gas auch in die Flüssigkeit eingeleitet werden, so dass es in Blasenform in der Flüssigkeit nach oben steigt und hierbei eine Versorgung der Zellen gewährleistet. Es wurde festgestellt, dass das Einleiten von Gasen in die Flüssigkeit jedoch den Nachteil aufweist, dass es insbesondere bei Zellsuspensionen durch die aufsteigenden und ggf. platzenden Gasblasen zu Scherungen der Zellen kommen kann. Vorzugsweise wird bei der erfindungsgemäßen Vorrichtung das zur Versorgung der Zellen, erforderliche Gas nicht unmittelbar in die Zellsuspension, sondern nur in das Reservoir eingeleitet, so dass die entsprechenden Gase in den Raum zwischen Flüssigkeitsoberfläche und Deckel eingeleitet werden. Auf Grund der durch das Suspensionsmittel hervorgerufenen Bewegung der Zellsuspension erfolgt eine ausreichende Aufnahme der erforderlichen Gase in die Suspension.

Um das Dispensieren einer Zellsuspension über mehrere Stunden zu gewährleisten weist das Reservoir vorzugsweise ein Volumen von 1 - 500 ml auf, wobei die Größe des Reservoirs an die Volumina der beispielsweise in Titerplatten vorgesehen Wells angepasst ist.

Der zur Dispension der Zellsuspension vorgesehene Mikrodispenser ist vorzugsweise piezoelektrisch aktiviert. Dies hat den Vorteil, dass sehr kleine Mikrotropfen erzeugt werden können, deren Volumen kleiner als 10 nl, insbesondere kleiner als 3 nl und besonders bevorzugt kleiner als 0,5 nl, ist.

Ferner kann der Mikrodispenser derartig aufgebaut sein, dass ein Piezoelement auf einen flexiblen Kanal einwirkt, wobei der Kanal ein vorzugsweise in sich geschlossener runder Schlauch oder dergleichen ist. Dies hat den Vorteil, dass der Mikrodispenser auf einfache Weise gereinigt und damit steril gehalten werden kann.

Bei dem Mikrodispenser handelt es sich beispielsweise um eine Glas-Silizium-Struktur, in der eine Pumpkammer vorgesehen ist. Die Pumpkammer weist eine elastische Kammerwand auf, die mit einem elektrisch ansteuerbaren Aktuator zur Erzeugung von Druck in der Pumpkammer bzw. zur Verringerung des Kammervolumens verbunden ist. Durch die Ansteuerung des Aktuators wird von dem Mikrodispenser ein Tropfen abgegeben. Die Pumpkammer ist vorzugsweise durch eine Einlaßöffnung und eine Auslaßöffnung, die die Auslaßöffnung des Mikrodispensers bildet oder mit dieser verbunden ist, begrenzt. Die Einlaßöffnung ist über ein Fluidelement, wie ein Schlauch, mit dem Reservoir verbunden. Durch das Vorsehen einer Einlaßöffnung ist vermieden, dass der von dem Aktuator in der Pumpkammer erzeugte Druck eine Flüssigkeitsverdrängung in Richtung des Reservoirs anstelle in Richtung der Auslaßöffnung erzeugt. Über die Einlaßöffnung ist ein kontinuierlicher Zulauf der zu dispensierenden Flüssigkeit gewährleistet. Die Pumpkammer weist vorzugsweise ein Volumen zwischen 100 nl und 5 ml, vorzugsweise zwischen 100 nl und 10 µl, insbesondere zwischen 500 nl und 2 µl, auf. Die Düsenweite der Auslaßöffnung ist vorzugsweise kleiner als 500 µm, vorzugsweise kleiner als 200 µm, insbesondere kleiner als 100 µm. Somit kann bei der bevorzugten Dispensiervorrichtung eine Tropfengröße erzeugt werden, deren Volumen kleiner als 10 nl, insbesondere kleiner als 3 nl und besonders bevorzugt kleiner als 0,5 nl ist.

Als Mikrodispenser kann ferner auch eine mit einem Kolben versehene Dispensiereinheit mit Ventil und Düse o.dgl. vorgesehen sein. Durch entsprechendes Ansteuern von Kolben und Ventil ist es ebenfalls möglich, sehr kleine Tröpfchen zu erzeugen. Der Kolbenraum, der der vorstehenden Pumpkammer entspricht, weist hierbei ebenfalls die vorstehend beschriebenen Abmessungen auf, so dass auch entsprechende Tropfengrößen erzielt werden können.

Bei einer bevorzugten Ausführungsform ist das zwischen dem Reservoir und dem Mikrodispenser angeordnete Fluidelement mit einer Absperreinheit versehen. Die Absperreinheit dient zur Unterbrechung der Zufuhr der Zellsuspension zum Mikrodispenser. Es ist hierdurch möglich den Mikrodispenser zu reinigen. Eine Reinigung erfolgt beispielsweise in festen zeitlichen Abständen. Vorzugsweise handelt es sich bei der Absperreinheit um ein nicht unmittelbar in das fluide System eingreifendes Bauteil. Dies hat den Vorteil, dass die bei der Handhabung von Zellsuspension en erforderlichen Sterilitätsanforderungen gewährleistet sind. Das Vorsehen einer berührungsfreien Absperreinheit hat ferner den Vorteil, dass es biokompatibel ist. Dies bedeutet, dass kein Ventilmaterial, insbesondere keine Metallteile, beispielsweise mit der Zellsuspension in Berührung kommen und diese beeinträchtigen können. Insbesondere eignet sich als Absperreinheit ein Schlauchquetschventil.

Um die Reinigung des Mikrodispensers zu erleichtern, ist der Mikrodispenser vorzugsweise über ein zweites Fluidelement mit einem Vorratsbehälter verbunden, in dem Spülflüssigkeit vorgesehen ist. Es ist somit möglich eine automatische Reinigung des Mikrodispensers durchzuführen. Hierzu ist vorzugsweise mit dem zweiten Fluidelement eine zweite Absperreinheit verbunden, die entsprechend der vorstehend beschriebenen ersten Absperreinheit aufgebaut sein kann. Ebenso ist es möglich, ein herkömmliches Ventil in der zweiten Fluideinheit oder am Auslass des Vorratsbehälters für die Spülflüssigkeit vorzusehen, da bei der Spülflüssigkeit geringere Sterilitätsanforderungen eingehalten werden müssen.

Vorzugsweise unterscheiden sich die Innendurchmesser der Fluidelemente und der Absperreinheiten nicht oder nur geringfügig. Hierdurch ist ein Sedimentieren der Zellen und damit ein Endhomogenisieren der Zellsuspension vermieden. Die Durchmesser des gesamten Fluidsystems, die sich vorzugsweise nicht oder nur geringfügig voneinander unterscheiden, liegen vorzugsweise zwischen 5 mm und 500 µm. Besonders bevorzugt sind Durchmesser von 1,5 mm und 200 µm.

Vorzugsweise sind die Durchmesser der einzelnen in der Vorrichtung vorhandenen Kanäle, insbesondere in Abhängigkeit der abgegebenen Flüssigkeitsmenge, derart gewählt, dass die Aufenthaltszeit der Zellsuspension, im System kleiner als 10 min., kleiner als 5 min., insbesondere kleiner als 2 min., ist. Hierdurch sind Sedimentationseffekte in dem System im Wesentlichen vermieden. Diese Aufenthaltszeiten gelten selbstverständlich nicht für das Reservoir, in dem die Sedimentation durch das erfindungsgemäße Vorsehen eines Suspensionsmittels vermieden ist.

Nachfolgend wird die Erfindung anhand einer bevorzugten Ausführungsform unter Bezugnahme auf die anliegende Zeichnung näher erläutert.

Es zeigt:

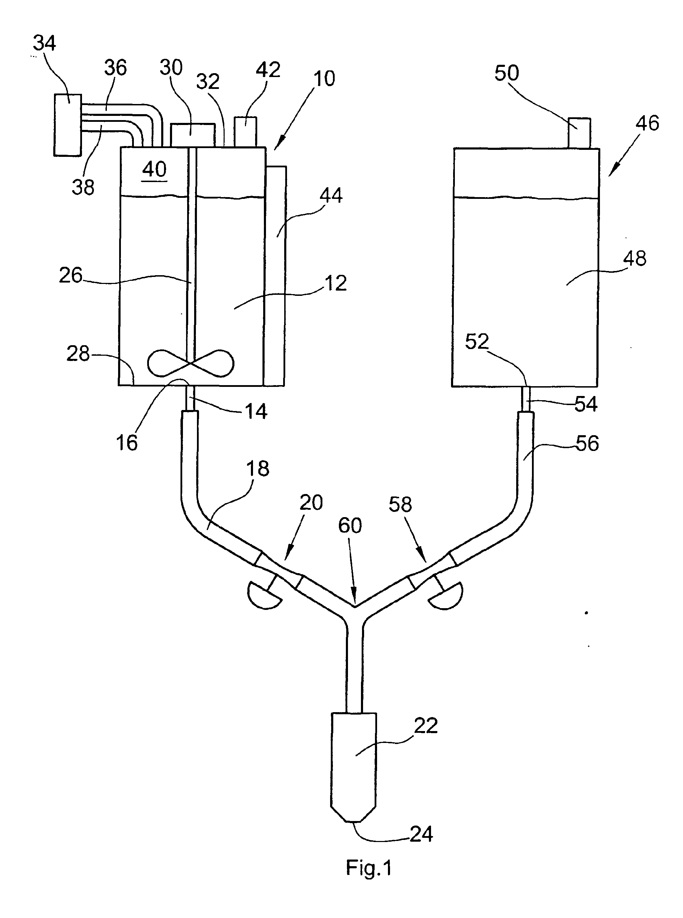

- Fig. 1: eine schematische Darstellung einer erfindungsgemäßen Ausführungsform der Dispensionsvorrichtung.

Die Dispensionsvorrichtung weist ein Reservoir 10 auf, in dem die Zellsuspension 12 aufgenommen ist. Das Reservoir 10 weist einen mit einem Auslassstutzen 14 versehenen Auslass 16 auf. Mit dem Auslassstutzen 14 ist als Fluidelement ein Schlauch 18 verbunden. Dieser ist unter Zwischenschaltung eines Schlauchquetschventils 20 mit einem Mikrodispenser 22 verbunden.

Der Innendurchmesser des Schlauchs 18 sowie des Auslassstutzens 14 ist vorzugsweise im Wesentlichen identisch. Es handelt sich somit um ein todvolumenfreies Kontaktelement. Eine entsprechende Verbindung besteht auch zu dem Schlauchquetschventil 20. Durch im Wesentlichen konstante Innendurchmesser der Fluidelemente ist das Auftreten von Restriktionsbereichen verhindert, die einen fluidischen Widerstand für die Zellen der Suspension darstellen. Hierdurch würden Scherungen sowie eine zeitliche Veränderung der Anzahl der in der Zellsuspension transportierten Zellen auftreten. Dies würde zum sogenannten Keystone-Effekt führen, der eine unreproduzierbare Anzahl von Zellen in den Wells hervorruft.

Der Mikrodispenser 22 weist eine Auslassöffnung 24 auf, aus der die Mikrotropfen zum Befüllen von Wells einer Titerplatte ausgestoßen werden.

Das Reservoir 10 weist als Suspensionsmittel einen Stabrührer 26 auf, durch den die Zellverteilung in der Zellsuspension 12 über einen längeren Zeitraum von vorzugsweise mehr als 6 Stunden, besonders bevorzugt mehr als 10 Stunden homogen gehalten wird.

Anstelle des in dem Ausführungsbeispiel dargestellten hängenden Stabrührers 26 ist es auch möglich, mehrere Suspensionsmittel vorzusehen. Diese sind vorzugsweise ebenfalls im Inneren des Reservoirs 10 angeordnet und liegen dort entweder auf einem Reservoirboden 28 auf oder sind hängend innerhalb der Zellsuspension 12 angeordnet. Der Antrieb der Suspensionsmittel kann, wie im dargestellten Ausführungsbeispiel bei dem Stabrührer 26, mittels eines Motors 30 erfolgen. Der Motor 30 ist außerhalb des Reservoirs 10 angeordnet. Bei dem dargestellten Ausführungsbeispiel ist der Motor 30 außen auf einem Deckel 32 des Reservoirs 10 angeordnet. Ebenso ist es möglich, die Suspensionsmittel, beispielsweise berührungslos über eine magnetische Aktuierung anzutreiben.

Eine weitere Möglichkeit zur Durchmischung der Zellsuspension und damit zur Aufrechterhaltung einer homogenen Zellverteilung besteht darin, eine Strömung in dem Reservoir 10 zu erzeugen. Dies kann beispielsweise durch das Vorsehen von Umwälzpumpen hervorgerufen werden. Vorzugsweise sind hierfür zwei Reservoire vorgesehen, zwischen denen die Zellsuspension mit Hilfe einer Umwälzpumpe bewegt wird.

Zur Versorgung der Zellsuspension 12, ist das Reservoir 10 mit einer Gasversorgungseinrichtung 34 verbunden. Mit Hilfe der Gasversorgungseinrichtung 34 wird über Leitungen 36, 38 Gas, beispielsweise Sauerstoff oder Kohlendioxid in einen Gasraum 40 geleitet. Der Gasraum 40 befindet sich innerhalb des Reservoirs 10 und ist oberhalb der Zellsuspension 12 vorgesehen. Zur Regelung der in dem Gasraum 40 vorhandenen Gasmenge sowie der unterschiedlichen Gasbestandteile weist die Gasversorgungseinrichtung 34 eine entsprechende Steuerung auf. Ferner ist an dem Deckel 32 ein Druckregler 42 angeordnet, um den Gasdruck in dem Gasraum 40 zu messen und über die Gasversorgungseinrichtung 34 zu regeln.

Zur Temperierung der Zellsuspension ist vorzugsweise ein Temperierelement 44 vorgesehen, das in dem dargestellten Ausführungsbeispiel an einer Außenwand des Reservoirs 10 angeordnet ist. Das Temperierelement 44 dient zum Erwärmen und/ oder Kühlen der Zellsuspension 12.

Ferner weist die erfindungsgemäße Dispensionsvorrichtung in dem dargestellten Ausführungsbeispiel einen Vorratsbehälter 46 auf, in dem eine Spülflüssigkeit 48 vorhanden ist. Der Vorratsbehälter 46 ist zur Druckregulierung ebenfalls mit einem Druckregler 50 verbunden. Der Druckregler 50 ermöglicht das Erzeugen eines Unterdruckes oder Überdruckes im Vorratsbehälter 46.

Ein Auslass 52 des Vorratsbehälters 46 ist mit einem Auslassstutzen 54 versehen, der mit einem Schlauch 56 verbunden ist. Der Schlauch 56 ist über ein zweites Schlauchquetschventil 58 ebenfalls mit dem Mikrodispenser 22 verbunden. Im dargestellten Ausführungsbeispiel erfolgt die Verbindung über ein Y-Schlauchverbindungsteil 60, so dass die beiden Schläuche 18, 56 vor dem Mikrodispenser 22 zusammengeführt sind und mit dem Mikrodispenser 22 nur ein Schlauch verbunden ist.

## Patentansprüche

1. Dispensionsvorrichtung zur Dispension von Zellsuspensionen (12), mit
einem Reservoir (10) zur Aufnahme der Zellsuspension (12),
einem auf die Zellsuspension (12) einwirkenden Suspensionsmittel (26) zur Aufrechterhaltung einer im Wesentlichen homogenen Zellverteilung in der Zellsuspension (12),
einem Mikrodispenser (22) zur Abgabe von Mikrotropfen, deren Volumen kleiner als 5 µl ist, und
einem das Reservoir (10) mit dem Mikrodispenser (22) verbindenden Fluidelement (18) zur kontinuierlichen Bereitstellung von Zellsuspension (12) an dem Mikrodispenser (22),
wobei das Suspensionsmittel als Rührer (26) ausgebildet ist.

2. Dispensionsvorrichtung nach Anspruch 1, **dadurch gekennzeichnet, dass** das Suspensionsmittel (26) derart ausgebildet ist, dass im Wesentlichen keine Beschädigung der Zellen auftritt.

3. Dispensionsvorrichtung nach Anspruch 1 oder 2, **dadurch gekennzeichnet, dass** der Rührer (26) mindestens drei, vorzugsweise mindestens vier Rührblätter aufweist.

4. Dispensionsvorrichtung nach Anspruch 3, **dadurch gekennzeichnet, dass** die Rührblätter gegenüber einer Längsachse des Rührers (26) einen Winkel von 50 bis 85°, vorzugsweise 60 bis 70°, einschließen.

5. Dispensionsvorrichtung nach Anspruch 3 oder 4, **dadurch gekennzeichnet, dass** die Rührblätter Mischflächen aufweisen, die leicht konkav ausgebildet sind.

6. Dispensionsvorrichtung nach einem der Ansprüche 1-5, **dadurch gekennzeichnet, dass** das Reservoir (10) mit einer Gasversorgungseinrichtung zur Versorgung der Zelluspensionen mit Gas verbunden ist.

7. Dispensionsvorrichtung nach einem der Ansprüche 1-6, **dadurch gekennzeichnet, dass** der Mikrodispenser (22) piezoelektrisch aktiviert ist.

8. Dispensionsvorrichtung nach einem der Ansprüche 1-7, **dadurch gekennzeichnet, dass** der Mikrodispenser eine Pumpkammer aufweist, deren Volumen zwischen 100 nl und 5 ml, vorzugsweise zwischen 100 nl und 10 µl, besonders bevorzugt zwischen 500 nl und 2 µl beträgt.

9. Dispensionsvorrichtung nach einem der Ansprüche 1-8, **dadurch gekennzeichnet, dass** der Mikrodispenser eine Dispensieröffnung (24) aufweist, deren Durchmesser kleiner als 500 µm, insbesondere kleiner als 200 µm und besonders bevorzugt kleiner als 100 µm ist.

10. Dispensionsvorrichtung nach einem der Ansprüche 1-9, **dadurch gekennzeichnet, dass** mit dem Fluidelement (18) eine Absperreinheit (20) verbunden ist, um die Zufuhr von Zellsuspension (12) zum Mikrodispenser (22) zu unterbrechen.

11. Dispensionsvorrichtung nach Anspruch 10, **dadurch gekennzeichnet, dass** die Absperreinheit als Schlauchquetschventil (20) ausgebildet ist.

12. Dispensionsvorrichtung nach einem der Ansprüche 1-11, **dadurch gekennzeichnet, dass** der Mikrodispenser (22) über ein zweites Fluidelement (56) mit einem Vorratsbehälter (46) für Spülflüssigkeit (48) zum Reinigen des Mikrodispensers (22) verbunden ist.

13. Dispensionsvorrichtung nach Anspruch 12, **dadurch gekennzeichnet, dass** das zweite Fluidelement (56) mit einer Absperreinheit (58) verbunden ist.

## Claims

1. A dispensing device for the dispensing of particle suspensions (12), particularly of cell suspensions, comprising
a reservoir (10) for receiving the particle suspension (12),
a suspension means (26) acting on the particle suspension (12) for maintaining a substantially homogeneous particle distribution in the particle suspension (12),
a microdispenser (22) for dispensing microdroplets of a volume smaller than 5 µl, and
a fluid element (18) connecting the reservoir (10) to the microdispenser (22) for continuous provision of particle suspension (12) at the microdispenser (22),
the suspension means being provided as a stirrer (26).

2. The dispensing device according to claim 1, **characterized in that** the suspension means (26) is configured to the effect that substantially no damage is caused to the particles, particularly the cells.

3. The dispensing device according to claim 1 or 2, **characterized in that** the stirrer (26) comprises at least three, preferably at least four stirring blades.

4. The dispensing device according to claim 3, **characterized in that** the stirring blades include an angle of 50 to 85°, preferably 60 to 70° relative to a longitudinal axis of the stirrer (26).

5. The dispensing device according to claim 3 or 4, **characterized in that** the stirring blades comprise mixing faces of a slightly concave shape.

6. The dispensing device according to any one of claims 1-5, **characterized in that** the reservoir (10) is connected to a gas supply device for gas supply to the particle suspensions.

7. The dispensing device according to any one of claims 1-6, **characterized in that** the microdispenser (22) is piezo-electrically activated.

8. The dispensing device according to any one of claims 1-7, **characterized in that** the microdispenser comprises a pump chamber having a volume between 100 nl and 5 ml, more preferably between 100 nl and 10 µl and most preferably between 500 nl and 2 µl.

9. The dispensing device according to any one of claims 1-8, **characterized in that** the microdispenser comprises a dispensing opening (24) having a diameter smaller than 500 µm, preferably smaller than 200 µm and most preferably smaller than 100 µm.

10. The dispensing device according to any one of claims 1-9, **characterized in that** the fluid element (18) has a shut-off device (20) connected thereto for interrupting the supply of particle suspension (12) to the microdispenser (22).

11. The dispensing device according to claim 10, **characterized in that** the shut-off device is provided as a tube squeeze valve (20).

12. The dispensing device according to any one of claims 1-11, **characterized in that** the microdispenser (22) is connected, via a second fluid element (56), to a supply container (46) for rinsing liquid (48) for cleaning the microdispenser (22).

13. The dispensing device according to claim 12, **characterized in that** the second fluid element (56) is connected to a shut-off device (58).

## Revendications

1. Dispositif de distribution de suspensions cellulaires (12), comprenant
un réservoir (10) pour contenir la suspension cellulaire (12),
un moyen de suspension (26) agissant sur la suspension cellulaire (12) pour maintenir une distribution sensiblement homogène des cellules dans la suspension cellulaire (12),
un micro-distributeur (22) pour distribuer des micro-gouttes d'un volume plus petit que 5 µl, et
un élément fluide (18) reliant le réservoir (10) au micro-distributeur (22) pour la mise à disposition continue de suspension cellulaire (12) au niveau du micro-distributeur (22),
le moyen de suspension étant réalisé en forme d'un agitateur (26).

2. Dispositif de distribution selon la revendication 1, **caractérisé en ce que** le moyen de suspension (26) est formé de sorte que les cellules ne sont sensiblement pas endommagées.

3. Dispositif de distribution selon la revendication 1 ou 2, **caractérisé en ce que** l'agitateur (26) comprend au moins trois, de préférence au moins quatre ailettes.

4. Dispositif de distribution selon la revendication 1, **caractérisé en ce que** les ailettes forment un angle de 50 à 85°, de préférence 60 à 70°, avec un axe longitudinal de l'agitateur (26).

5. Dispositif de distribution selon la revendication 3 ou 4, **caractérisé en ce que** les ailettes comprend des surfaces mélangeuses à forme légèrement concave.

6. Dispositif de distribution selon une quelconque des revendications 1-5, **caractérisé en ce que** le réservoir (10) est raccordé avec un moyen d'alimentation en gaz pour l'alimentation en gaz de la suspension cellulaire.

7. Dispositif de distribution selon une quelconque des revendications 1-6, **caractérisé en ce que** le micro-distributeur (22) est activé par piézoélectricité.

8. Dispositif de distribution selon une quelconque des revendications 1-7, **caractérisé en ce que** le micro-distributeur comprend une pompe dont le volume est entre 100 nl et 5 ml, de préférence entre 100 nl et 10 µl, plus de préférence entre 500 nl et 2µl.

9. Dispositif de distribution selon une quelconque des revendications 1-8, **caractérisé en ce que** le micro-distributeur comprend une orifice de distribution (24) dont le diamètre est plus petit que 500 µm, de préférence plus petit que 200 µm, et plus de préférence plus petit que 100 µm.

10. Dispositif de distribution selon une quelconque des revendications 1-9, **caractérisé en ce que** l'élément fluide (18) est raccordé à un dispositif d'arrêt (20) pour arrêter l'alimentation en suspension cellulaire (12) du micro-distributeur (22).

11. Dispositif de distribution selon la revendication 10, **caractérisé en ce que** l'élément d'arrêt est en forme d'une vanne péristaltique (20).

12. Dispositif de distribution selon une quelconque des revendications 1-11, **caractérisé en ce que** le micro-distributeur (22) est relié à un réservoir de stockage (46) pour liquide de balayage (48) par un deuxième élément fluide (56), prévu pour nettoyer le micro-distributeur (22).

13. Dispositif de distribution selon la revendication 12, **caractérisé en ce que** le deuxième élément fluide (56) est raccordé à un dispositif d'arrêt (58).
